Europäisches Patentamt

European Patent Office

Office européen des brevets

(11) Veröffentlichungsnummer : **0 209 029**
**B1**

(12)                    EUROPÄISCHE PATENTSCHRIFT

(45) Veröffentlichungstag der Patentschrift :
30.11.88

(51) Int. Cl.⁴ : **D 06 P   1/44, C 08 F236/04**

(21) Anmeldenummer : **86109207.0**

(22) Anmeldetag : **05.07.86**

(54) **Bindemittel für den Pigmentdruck von Textilgut.**

(30) Priorität : **19.07.85 DE 3525799**

(43) Veröffentlichungstag der Anmeldung :
**21.01.87 Patentblatt 87/04**

(45) Bekanntmachung des Hinweises auf die Patenterteilung : **30.11.88 Patentblatt 88/48**

(84) Benannte Vertragsstaaten :
**AT BE CH DE FR GB IT LI NL SE**

(56) Entgegenhaltungen :
**EP-A- 0 016 403**
**DE-B- 1 257 736**
**DE-B- 1 719 395**

(73) Patentinhaber : **BASF Aktiengesellschaft**
**Carl-Bosch-Strasse 38**
**D-6700 Ludwigshafen (DE)**

(72) Erfinder : **Schmidt-Thuemmes, Jürgen, Dr.**
**Altholzweg 25**
**D-6700 Ludwigshafen (DE)**
Erfinder : **Uhl, Günther**
**Pfrimmanlage 55**
**D-6520 Worms 1 (DE)**
Erfinder : **Schoepke, Holger, Dr.**
**Diesselstrasse 16**
**D-6700 Ludwigshafen (DE)**

# 0 209 029

## Beschreibung

Aus der DE-B-17 19 395 ist ein Bindemittel für den Pigmentdruck von Textilgut auf der Grundlage von selbstvernetzenden Polymerisaten bekannt, das aus einer Mischung von zwei unterschiedlichen Polymerisaten besteht, wobei ein Polymerisat, das als Verdickungsmittel wirkt, 99,95 bis 95 Gew.% Acrylsäure und/oder Methacrylsäure und 0,05 bis 5 Gew.% wenigstens eines Monomeren mit 2 polymerisierbaren Doppelbindungen einpolymerisiert enthält. Das andere Polymerisat enthält 0,5 bis 5 % wenigstens eines gegebenenfalls mit einem 1 bis 4 Kohlenstoffatome enthaltenden Alkohol veretherten N-Methylomamid der Acryl- und/oder Methacrylsäure und 99,5 bis 95 % wenigstens eines Esters der Acrylsäure und/oder Methacrylsäure mit einem 1 bis 8 Kohlenstoffatome enthaltenden Alkohol und/oder wenigstens eines Monomeren mit 2 konjugierten Doppelbindungen. Das zuletzt genannte Polymerisat ist aufgrund des Gehalts an N-Methylolamidgruppen selbstvernetzend, weil es beim Erhitzen auf Temperaturen oberhalb von etwa 120 °C vernetzt. Gemäß den Beispielen der DE-B-17 19 395 bestehen die Bindemittel aus Mischpolymerisaten von Butadien, Acrylnitril, Styrol und N-Methylolacrylamid bzw. aus einem Mischpolymerisat aus Butadien, Styrol und N-Methylolmethacrylamid. Die bekannten Bindemittel erniedrigen die Viskosität der synthetischen Verdickungsmittel meht oder weniger stark. Um die Viskosität der Pigmentdruckpasten nach Zusatz des Bindemittels wieder anzuheben, muß man erneut Verdickungsmitel zusetzen. Es ist zwar bekannt, daß man die viskositätsvermindernde Wirkung der Bindemittel durch Reduzierung der Salzgehalte der Emulsionspolymerisate (z. B. Erniedrigung der Menge der Starter, wie Kaliumperoxidisulfat oder der zugesetzten Puffer, wie Natriumpyrophosphat) verringern kann. Aus polymerisationstechnischen Gründen kann jedoch die Salzmenge bei der Emulsionspolymerisation nicht beliebig verringert werden.

In der DE-B-1 257 736 werden in allgemeiner Form Pigmentdruckpasten mit N-Methylol-carbonsäureamid-Gruppen enthaltenden Mischpolymerisaten beschrieben. Aus den Beispielen geht hervor, daß neben anderen Comonomeren stets Ester der Acrylsäure mit einem niederen Alkohol verwendet werden. Auch diese Bindemittel weisen mehr oder weniger stark viskositätsvermindernde Eigenschaften auf.

In der EP-A-0 016 403 werden Butadien-Copolymerisat-Dispersionen, die im Polymerisat 20 bis 80 Gew.% Butadien, 80 bis 20 Gew.% Styrol, 0 bis 30 Gew.% Acryl- und/oder Methacrylester 4 bis 8 C-Atome enthaltenden Alkanole und/oder Acrylnitril und 0 bis 5 Gew.% hydrophile Gruppen aufweisende monoolefinische ungesättigte Monomere, wie N-Methylolamide der Acryl- oder Methacrylsäure, enthalten, als Synthese-Kautschuk-Latices beschrieben. Eine Verwendung in Textilpigmentdruckpasten hat daraus nicht nahegelegen.

Der vorliegenden Erfindung liegt die Aufgabe zugrunde, ein selbstvernetzendes Bindemittel für die Verwendung in Textilpigmentdruckpasten aufzuzeigen, das die Viskosität von synthetischen Verdickungsmitteln in Textilpigmentdruckpasten nicht in dem Maße erniedrigt wie die bisher dafür verwendeten Bindemittel.

Die Aufgabe wird durch die Verwendung eines Emulsionspolymerisats, das

(a) 10 bis 70 Gew.-% Butadien und/oder Isopren,

(b) 10 bis 50 Gew.-% eines Esters der Acrylsäure oder Methacrylsäure mit einem $C_8$- bis $C_{18}$-Alkohol,

(c) 10 bis 40 Gew.% Acrylnitril und/oder Styrol,

(d) 0,5 bis 10 Gew.% N-Methylolacrylamid, N-Methylolmethacrylamid und/oder deren $C_1$- bis $C_4$-Alkylether und gegebenenfalls

(e) 0 bis 5 Gew.-% andere, damit copolymerisierbare monoethylenisch umgesättigte Verbindungen einpolymerisiert enthält, wobei die Summe der Gewichtsprozente jeweils 100 beträgt, als Bindemittel in Textildruckpasten gelöst.

Mit den erfindungsgemäßen zu verwendenden Emulsionscopolymerisaten werden sowohl in benzinhaltigen als auch insbesondere in benzinfreien Druckpasten, die nur mit Hilfe synthetischer Verdickungsmittel verdickt sind, gegenüber den bekannten Bindemitteln höhere Viskositäten erreicht. Das bedeutet, daß bei Verwendung dieser selbstvernetzenden Bindemittel in einer bestimmten Druckzeptur eine geringere Menge an synthetischem Verdickungsmittel erforderlich ist als bei Verwendung üblicher selbstvernetzender Bindemittel gegenüber dem Stand der Technik Druckpasten mit höheren Viskositäten herstellbar sind.

Die erfindungsgemäß für den Pigmentdruck von Textilgut einzusetzenden selbstvernetzenden Bindemittel werden nach an sich bekannten Methoden der radikalischen Emulsionspolymerisation erhalten. Sie können sowohl in kontinuierlichen als auch in diskontinuierlichen Verfahren hergestellt werden, wobei im letzteren Fall sowohl ein Batch-(Eintopf)-Verfahren als auch ein Zulaufverfahren möglich ist, bei dem die Monomeren kontinuierlich oder absatzweise in dem Maße dem Polymerisationsgefäß zugeführt werden, indem sie auch polymerisieren. Die selbstvernetzenden Bindemittel werden vorzugsweise nach dem Emulsionszulaufverfahren hergestellt. Bei diesem Verfahren wird, wie an sich üblich, in einer wäßrigen Vorlage ein Teil der Monomerenmischung in emulgierter Form zusammen mit einem entsprechenden Teil des Emulgators und des Polymerisationsinitiators vorgelegt und die Vorlage auf Polymerisationstemperatur erwärmt. Nach dem Anspringen der Polymerisation läßt man die restliche Monomerenemulsion, die Emulgator und im allgemeinen Regler enthält, sowie getrennt davon eine

2

wäßrige Lösung des Polymerisationsinitiators nach Maßgabe der Polymerisationsgeschwindigkeit zulaufen. Die Polymerisationstemperatur liegt meistens in dem Bereich von 20 bis 90, vorzugsweise 50 bis 75 °C. Man verwendet die üblichen wasserlöslichen radikalbildenden Polymerisationsinitiatoren, wie Natrium- und Ammoniumpersulfat sowie Redoxkatalysatoren, z. B. tert. Butylperbenzoat/Formaldehydsulfoxylat/Eisen(II)sulfat und tert. Butylhydroperoxid/Ascorbinsäure/Eisen(II)sulfat. Als Emulgiermittel kommen die üblichen anionischen und nichtionischen Emulgatoren in Frage, wobei Mischungen von beiden Typen von besonderem Interesse sind. Die Initiatoren und Emulgatoren werden in den bei Emulsionspolymerisationen üblichen Mengen verwendet. Als Hilfsstoff bei der Polymerisation können die bekannten Polymerisationsregler verwendet werden, z. B. Mercaptane wie Dodecylmercaptan, 2-Mercaptoethanol, Thioglycolsäure und halogenierte Kohlenwasserstoffe, z. B. Trichlormethan.

Das zu verwendende Emulsionspolymerisat enthält als Monomer der Komponente (a) 10 bis 70, vorzugsweise 40 bis 70 Gew.% Butadien oder Isopren oder auch Mischungen aus Butadien und Isopren einpolymerisiert. Als Komponente (b) enthält das Emulsionspolymerisat 10 bis 50, vorzugsweise 10 bis 30 Gew.-% eines Esters der Acrylsäure oder Methacrylsäure mit einem $C_8$- bis $C_{18}$-Alkohol. Geeignete Ester dieser Art sind beispielsweise 2-Ethylhexylacrylat, 2-Ethylhexylmethacrylat, Dodecylacrylat, Dodecylmethacrylat, Laurylacrylat, Laurylmethacrylat, sowie die Ester der Acrylsäure und der Methacrylsäure mit Palmithylalkohol und Stearylalkohol. Vorzugsweise verwendet man als Komponente (b) 2-Ethylhexylacrylat, Stearylacrylat und Laurylacrylat. Es ist selbstverständlich auch möglich, Mischungen verschiedener Acrylsäureester sowie Mischungen aus einem Acrylsäureester und einem Metacrylsäureester eines Alkohols der angegebenen Kohlenstoffzahl als Komponente (b) zur Herstellung der Emulsionscopolymerisate zu verwenden.

Das Emulsionscopolymerisat enthält als Komponente (c) 10 bis 40 Gew.% Acrylnitril oder Styrol bzw. Mischungen aus Acrylnitril und Styrol in polymerisierter Form. Damit das Polymerisat selbstvernetzend ist, polymerisiert man als Komponente (d) 0,5 bis 10, vorzugsweise 2,0 bis 5,5 Gew.% N-Methylolacrylamid, N-Methylolmethacrylamid und/oder deren $C_1$- bis $C_4$-Alkylether ein. Wie oben bereits angegeben, bewirken diese Verbindungen beim Erhitzen des Copolymerisats auf Temperaturen oberhalb von 120 °C eine Vernetzung des Emulsionscopolymerisats.

Die Emulsionscopolymerisate können gegebenenfalls zur Modifizierung bis zu 5 Gew.% einer Komponente (e) enthalten, die aus anderen, mit den unter (a) bis (d) angegebenen Monomeren copolymerisierbar ist, wobei die Summe der Gewichtsprozente der einpolymerisierten Komponenten (a) bis (e) in den Copolymerisaten immer 100 beträgt. Solche damit copolymerisierbaren monoethylenisch ungesättigten Verbindungen sind beispielsweise Acrylamid, Methacrylamid, $C_3$- bis $C_5$-ethylenisch ungesättigte Mono- und Dicarbonsäuren, wie Acrylsäure, Methacrylsäure, Maleinsäure, Fumarsäure und Crotonsäure, Hydroxyalkylester der Acrylsäure und Methacrylsäure, wie 2-Hydroxyethylacrylat oder 2-Hydroxyethylmethacrylat, Vinylester von $C_3$- bis $C_8$-Alkylcarbonsäuren und $C_1$- bis $C_4$-Alkylvinylether. Es können auch Mischungen der genannten Verbindungen eingesetzt werden, wobei deren Gesamtmenge 5 Gew.% nicht überschreitet.

Die Emulsionspolymerisate, die die Komponenten (a) bis (d) und gegebenenfalls (e) einpolymerisiert enthalten, werden als selbstvernetzendes Bindemittel zur Herstellung von Druckpasten für den Pigmentdruck von Textilgut verwendet. Die Druckpasten enthalten als wesentliche Komponenten ein Pigment, ein Bindemittel, ein Verdickungsmittel sowie übliche Hilfsstoffe. Die gemäß Erfindung einzusetzenden Emulsionscopolymerisate sind in einer Menge von 2 bis 10 Gew.% in der Druckpaste enthalten. Der Feststoffgehalt der Emulsionscopolymerisate, die als Dispersion anfallen, beträgt 35 bis 60 Gew.%. Als Verdickungsmittel kommen für die Herstellung benzinfreier Druckpasten synthetische Verdickungsmittel auf Basis von vernetzten Polymerisaten der Acrylsäure oder Methacrylsäure in Betracht. Verdickungsmittel dieser Art sind handelsübliche Produkte. Bei der Herstellung von benzinhaltigen Druckpasten wird ein Teil des Verdickungsmittels durch ein Kohlenwasserstofföl ersetzt. Vorzugsweise werden jedoch aus Umweltschutzgründen benzinfreie Druckpasten hergestellt. Als Pigmente für die Druckpasten kommen sowohl anorganische als auch organische Pigmente in Betracht. Die Druckpasten enthalten die Pigmente in einer Menge von 0,001 % bis 3 %. Die synthetischen Verdickungsmittel werden in den an sich üblichen und dem Fachmann bekannten, stark von der Art des Verdickungsmittels abhängenden Mengen eingesetzt.

Die mit den erfindungsgemäß einzusetzenden selbstvernetzenden Bindemitteln hergestellten Druckpasten, die im übrigen wie herkömmliche Druckpasten angewendet werden, eignen sich für das Bedrucken von Textilien aus Fasermaterialien aller Art, z. B. aus Wolle, Zellwolle, Leinen, Seide, Acetatseide, Polyamiden aus Caprolactam bzw. Hexamethylendiamin und Adipinsäure, Polyethylenterephthalat, Polyacrylnitril und Mischungen der genannten Faserarten. In allen Fällen erhält man Drucke mit ausgezeichneten Eigenschaften, wobei vor allem überraschend hohe Wasch- und Reibechtheiten gegenüber herkömmlichen Druckpasten resultieren. Die Druckpasten, die das gemäß Erfindung einzusetzende selbstvernetzende Bindemittel enthalten, eignen sich daher universell zum Bedrucken der unterschiedlichsten Substrate. Die Drucke, die unter Verwendung von Druckpasten hergestellt werden, die das obenbeschriebene Copolymerisat als selbstvernetzendes Bindemittel enthalten, weisen einen sehr weichen Griff auf.

Die hohe Viskosität, die die obenbeschriebenen Emulsioncopolymerisate in Abmischung mit synthetischen Verdickern haben, erlaubt es darüber hinaus, die in Betracht kommenden selbstvernetzenden Latices in Abmischung mit Verdickern auch für andere Anwendungen einzeusetzen, z. B. für die Beschichtung von Textilgut, die Beschichtung von Papier und die Zurichtung von Leder.

Die in den Beispielen angegebenen Teile sind Gewichtsteile, die Angaben in % beziehen sich, sofern nichts anderes angegeben ist, auf das Gewicht der Stoffe.

I Herstellung erfindungsgemäßen verwendender Bindemittel

Bindemittel A

In einem mit einem Ankerrührer ausgestatteten 30 I-Edelstahlautoklaven werden 1,6 kg Wasser, 0,021 kg des Natriumsulfonats eines Gemischs langkettiger Paraffinkohlenwasserstoffe mit einer mittleren Kettenlänge von 15 C-Atomen und 0,006 kg Natriumpersulfat sowie 2 I einer Emulsion, bestehend aus 9,1 kg Wasser, 5 kg Butadien, 2,5 kg 2-Ethyl-Hexylacrylat, 2 kg Acrylnitril, 0,5 kg N-Methylolmethacrylamid, 0,2 kg eines ethoxilierten Octylphenols mit einem mittleren Ethoxilierungsgrad von 25, 0,2 kg des Natriumsulfonats eines Gemischs langkettiger Paraffinkohlenwasserstoffe mit einer mittleren Kettenlänge von 15 C-Atomen, 0,045 kg Natriumpyrophosphat und 0,048 kg tert.-Dodecylmerkaptan vorgelegt, der Inhalt unter Rühren auf 60 °C aufgeheizt und danach der Rest der Emulsion sowie eine Lösung aus 0,034 kg Natriumpersulfat in 1,525 kg Wasser innerhalb von 3 Stunden zugefahren. Nach einer Nachpolymerisationszeit von 9 Stunden wird ein stippenfreier, stabiler Latex mit einem Feststoffgehalt von 44,5 % erhalten, der durch Einleiten von Dampf von restlichen Monomeren befreit wird. Durch Verdünnen mit Wasser wird ein Feststoffgehalt von 44 % eingestellt.

Bindemittel B

Bindemittel B wird wie Bindemittel A hergestellt mit der Ausnahme, daß man Laurylacrylat an Stelle von 2-Ethyl-Hexylacrylat verwendet.

Bindemittel C

Bindemittel C wird wie Bindemittel A hergestellt mit der Ausnahme, daß man an Stelle von 2-Ethyl-Hexylacrylat Stearylacrylat verwendet.

Zum Vergleich mit dem Stand der Technik wurden die Bindemittel D bis G hergestellt:

Bindemittel D

Bindemittel D wird wie Bindemittel A hergestellt, jedoch wird an Stelle von 2,5 kg 2-Ethylhexylacrylat dieselbe Menge Butadien, insgesamt also 7,5 kg Butadien, eingesetzt.

Bindemittel E bis G

Die Bindemittel E bis G werden wie Bindemittel A hergestellt, jedoch jeweils mit Ethylacrylat (Bindemittel E) bzw. n-Butylacrylat (Bindemittel F) bzw. n-Hexylacrylat (Bindemittel G) statt 2-Ethylhexylacrylat.

II Verwendung für die Herstellung von Druckpasten

(a) Benzinhaltige Druckpaste

Durch Mischen von 50 Teilen einer 5 %igen Alginatlösung, 10 Teilen ethoxiliertem p-Benzyl-o-phenylphenol mit einem mittleren Ethoxilierungsgrad von 9 bis 12 und 160 Teilen Wasser, in die 780 Teile Benzin vom Siedebereich 120 bis 200 °C einemulgiert wurden, wird eine benzinhaltige Emulsion angesetzt. 825 Teile der so angesetzten Emulsion werden dann jeweils mit 120 Teilen Bindemitteldispersion A bis G, 25 Teile einer 35 %igen wäßrigen Anteigung eines Cu-phthalocyaninblau-Farbstoffs (Cl 74160) und 30 Teile einer 33 %igen wäßrigen Diammoniumphosphatlösung zu einer homogenen Druckpaste vermischt. Die Ergebnisse von Viskositätsmessungen sind in der Tabelle angegeben.

(b) Benzinarme Druckpaste

Es wird eine benzinarme Emulsion angesetzt durch Mischen von 30 Teilen Verdicker 1 (siehe unten), 3 Teilen eines ethoxilierten p-Benzyl-o-phenylphenols mit einem mittleren Ethoxilierungsgrad von 9 bis 12, 767 Teilen Wasser und 200 Teilen Benzin vom Siedebereich 140 bis 210 °C. 825 Teile der so hergestellten Emulsion werden mit jeweils 120 Teilen Bindemitteldispersion A bis G, 25 Teilen der oben beschriebenen Cu-phthalocyaninblau-Farbstoffanteigung und 30 Teilen einer 33 %igen wäßrigen Diammoniumphosphatlösung zu einer homogenen Druckpaste vermischt. Die Ergebnisse der Viskositätsmengen sind in der Tabelle angegeben.

(c) Benzinfreie Druckpasten

Verdicker 1

Bei Verdicker 1 handelt es sich um eine wäßrige Emulsion, bestehend zu 33 % aus einem auf eine Ethylen-Propylen-Dicyclopentadien-Kautschuk-Pfropfgrundlage aufpolymerisierten Copolymerisat aus 47 % Butylacrylat, 3 % Laurylacrylat und 50 % Acrylsäure und zu 13 % aus einer anvernetzten, hochmolekularen Polyacrylsäure, neutralisiert mit Ammoniak. 855 Teile einer daraus durch Verdünnen mit Wasser hergestellten 3,8 %igen Verdickung werden mit 25 Teilen der oben beschriebenen Cu-phthalocyaninblau-Farbstoffanteigung und jeweils 120 Teilen Bindemitteldispersion A bis G vermischt und zu einer homogenen Druckpaste verrührt. Die Ergebnisse von Viskositätsmessungen sind in der Tabelle angegeben.

Verdicker 2

Bei Verdicker 2 handelt es sich um eine 5 %ige Aufschlämmung einer anvernetzten, hochmolekularen Polyacrylsäure, neutralisiert mit Ammoniak, in einer Glykol-Wasser-Mischung. 120 Teilen Verdicker 2 werden mit jeweils 120 Teilen der Bindemitteldispersion A bis G und 25 Teilen der oben beschriebenen Cu-phthalocyaninblau-Farbstoffanteigung vermischt, mit Wasser zu 1 000 Teilen ergänzt und durch Verrühren eine homogene Druckpaste hergestellt. Die Ergebnisse von Viskositätsmessungen sind in der Tabelle angegeben.

Verdicker 3

Bei Verdicker 3 handelt es sich um ein anvernetztes Polymerisat aus 90 % Acrylsäure und 10 % Acrylamid. 855 Teile einer durch Verdünnen mit Wasser daraus hergestellten 4,5 %igen Verdickung werden mit jeweils 120 Teilen einer Bindemitteldispersion A bis G und 25 Teilen der oben beschriebenen Cu-phthalocyaninblau-Farbstoffanteigung vermischt und zu einer homogenen Druckpaste verrührt. Die Ergebnisse von Viskositätsmessungen sind in der Tabelle angegeben.

Verdicker 4

Bei Verdicker 4 handelt es sich um eine 7 %ige Aufschlämmung eines teilvernetzten Ethylen-Maleinsäure-Copolymerisats in Benzin. 855 Teile einer durch Verdünnen mit Wasser daraus hergestellten 4,5 %igen Verdickung werden mit jeweils 120 Teilen Bindemitteldispersion A bis G und 25 Teilen der oben beschriebenen Cu-phthalocyaninblau-Farbstoffanteigung vermischt und zu einer homogenen Druckpaste verrührt. Die Ergebnisse von Viskositätsmessungen sind in der Tabelle angegeben.

Sämtliche Viskositätsmessungen wurden im Viscotester VT 24 der Fa. Haake durchgeführt. Der Ergebnisse der Viskositätsmessungen sind in der folgenden Tabelle zusammengestellt (Viskosität in Pa · s).

Tabelle

| Bindemittel | (a) benzin-haltig | (b) benzin-arm | (c) benzinfrei 1 | 2 | 3 | 4 |
|---|---|---|---|---|---|---|
| erfindungsgemäß | | | | | | |
| A | 12,0 | 17,4 | 12,5 | 29,0 | 25,0 | 20,3 |
| B | 11,2 | 17,0 | 13,0 | 23,0 | 22,4 | 19,0 |
| C | 18,0 | 22,3 | 17,0 | 25,2 | 24,5 | 22,1 |
| Vergleich | | | | | | |
| D | 9,0 | 14,0 | 10,0 | 20,1 | 19,8 | 14,9 |
| E | 8,7 | 14,0 | 10,0 | 20,8 | 20,0 | 14,7 |
| F | 8,1 | 12,5 | 8,6 | 16,8 | 19,2 | 14,4 |
| G | 8,7 | 14,0 | 10,0 | 21,0 | 17,0 | 15,0 |

**Patentansprüche**

1. Verwendung eines Emulsionspolymerisats, das
   a)  10 bis 70 Gew.% Butadien und/oder Isopren,
   b)  10 bis 50 Gew.% eines Esters der Acrylsäure oder Methacrylsäure mit einem $C_8$- bis $C_{18}$-Alkohol,
   c)  10 bis 40 Gew.% Acrylnitril und/oder Styrol,
   d)  0,5 bis 10 Gew.% N-Methylolacrylamid, N-Methylolmethacrylamid und/oder deren $C_1$- bis $C_4$-Alkylether und gegebenenfalls
   e)  0 bis 5 Gew.% andere, damit copolymerisierbare monoethylenisch ungesättigte Verbindungen einpolymerisiert enthält, wobei die Summe der Gewichtsprozente jeweils 100 beträgt, als Bindemittel in Textilpigmentdruckpasten.

2. Verwendung eines Emulsionspolymerisats, wie in Anspruch 1 definiert, wobei das Emulsionspolymerisat als Komponente b) 2-Ethylhexylacrylat einpolymerisiert enthält.

3. Verwendung eines Emulsionspolymerisats, wie in Anspruch 1 definiert, wobei das Emulsionspolymerisat als Komponente b) Laurylacrylat einpolymerisiert enthält.

4. Verwendung eines Emulsionspolymerisats, wie in Anspruch 1 definiert, wobei das Emulsionspolymerisat als Komponente b) Stearylacrylat einpolymerisiert enthält.

**Claims**

1. Use of an emulsion polymer containing in copolymerised form
   a)  from 10 to 70 % by weight of butadien and /or isoprene,
   b)  from 10 to 50 % by weight of an ester or acrylic or methylacrylic acid with a $C_8$-$C_{18}$ alcohol,
   c)  from 10 to 40 % by weight of acrylnitrile and/or styrene,
   d)  from 0.5 to 10 % by weight of N-methylolacylamide, N-methylolmethacrylamide and/or $C_1$-$C_4$ alkyl ethers and optionally,
   e)  from 0 to 5 % by weight of other monoethylically unsaturated compounds copolymerisable therewith,
   the weight of percentages always adding up to 100, as a binder in textile pigment print pastes.

2. Use of an emulsion polymer as defined in claim 1, wherein the emulsion polymer contains as components b) 2-ethylhexyl acrylate in copolymerised form.

3. Use of an emulsion polymer as defined in claim 1, wherein the emulsion polymer contains as components b) lauryl acrylate in copolymerised form.

4. Use of an emulsion polymer as defined in claim 1, wherein the emulsion polymer contains as components b) stearyl acrylate in copolymerised form.

**Revendications**

1. Utilisation d'un polymère en émulsion, qui contient en liaison polymère
   a)  10 à 70 % en poids de butadiène et/ou d'isoprène,
   b)  10 à 50 % en poids d'un ester d'acide acrylique ou méthacrylique avec un alcool en $C_8$ à $C_{18}$,
   c)  10 à 40 % en poids d'acrylonitrile et/ou de styrène,
   d)  0,5 à 10 % en poids de N-méthylolacrylamide, de N-méthylolméthacrylamide et/ou de leurs éthers alkyliques en $C_1$-$C_4$ et éventuellement
   e)  0 à 5 % en poids d'autres composés à une seule insaturation éthylénique copolymérisables avec les précédents,
   la somme des pourcentages en poids se montant à 100 dans chaque cas, comme liant dans les pâtes d'impression pigmentaire pour textiles.

2. Utilisation d'un polymère en émulsion, tel que défini dans la revendication 1, où le polymère en émulsion contient, en liaison polymère, de l'acrylate de 2-éthylhexyle en tant que composant b).

3. Utilisation d'un polymère en émulsion, tel que défini dans la revendication 1, où le polymère en émulsion contient, en liaison polymère, de l'acrylate de lauryle en tant que composant b).

4. Utilisation d'un polymère en émulsion, tel que défini dans la revendication 1, où le polymère en émulsion contient, en liaison polymère, de l'acrylate de stéaryle en tant que composant b).